# EUROPÄISCHE PATENTANMELDUNG

(11) **EP 2 386 781 A1**
(43) Veröffentlichungstag der Anmeldung: **16.11.2011**
(21) Anmeldenummer: 11003841.1
(22) Anmeldetag: 10.05.2011
(51) Int. Cl.: F16H 19/00, F16G 13/18

(54) **Bandantrieb für Zug-und Druckbeanspruchung**

(30) Priorität: 12.05.2010 DE 102010020410
(71) Anmelder: Gröninger Antriebstechnik GmbH & Co. KG, 72631 Aichtal (DE)
(72) Erfinder: Grüner, Holger, 72135 Dettenhausen (DE); Gröninger, Matthias Robert, 72631 Aichtal (DE)
(74) Vertreter: Tischer, Christiane

(57) **Zusammenfassung**

2.1 Zum automatisierten Öffnen von Flügeln muss die Kraft vom Elektromotor auf den Flügel übertragen werden. Bei den bekannten Antrieben führt die Vielzahl der Bauteile oder deren aufwändige Herstellung zu hohen Kosten. Der neue Antrieb soll preiswerte Bauteile enthalten, die einfach montierbar sind und eine hohe Stabilität aufweisen.

2.2 Um dem Antrieb Eigenschaften ähnlich einem Kettenantrieb zu geben, werden die steifen Elemente (6), die auf einem flexiblen Band (7) angebracht sind, eingesetzt. Die Kraftübertragung erfolgt vom Antriebsrad (3) auf die steifen Elemente (6) und von dort auf den Flügel (11).

2.3 Der Antrieb eignet sich für das automatisierte Öffnen bzw. Schließen von Flügeln wie z.B. Fenstern und Türen, außerdem für Stellaufgaben. Aufgrund des Einsatzes der steifen Elemente (6) und des flexiblen Bandes (7) sinkt der Produktionsaufwand.

## Beschreibung

Die Erfindung betrifft eine Antriebseinheit für eine Schwenk- oder Lineareinrichtung zum Schließen und Öffnen von Klappen, Türen, Fenstern (Flügeln) oder dergleichen. Des Weiteren eignet sich die Antriebseinheit auch für Stellaufgaben in anderen Bereichen, in denen Schwenk- oder Linearbewegungen benötigt werden, beispielsweise das automatische Öffnen und Schließen von Schubladen, Fächern oder Stellbewegungen in Maschinen.

### Stand der Technik

Für das Öffnen und Schließen von Flügeln sind mehrere Arten der mechanischen Kraftübertragung gebräuchlich. Dies sind Scheren- und Koppelgetriebe sowie Spindel- und Kettenantriebe.

Koppelgetriebe sind Stäbe, die gelenkig miteinander verbunden sind. Diese Technik ist bei fast allen automatischen Schwenktüren im Einsatz. Sie benötigen mehrere mechanische Bauteile, um die Schwenkbewegung zu erzeugen. Häufig wird dies durch die Kombination eines Scheren- und Gleitschienengestänges erreicht (siehe Elischewski/Heimann, "Automatiktüren und Ihre Antriebe", Landsberg/Lech 2001, Seite 49f).

Beim Scherenantrieb werden mechanische Bauteile für die Kraftumlenkung der linearen Schub- und Zugkräfte verwendet, um den Flügel zu schwenken. Das mechanische Prinzip basiert in der Regel auf einem Kurvengetriebe, welches die Schere antreibt.

Bei Spindelantrieben erfolgt die Kraftübertragung über die Drehbewegung einer auf die Spindel angebrachte Mutter, die von einem Elektromotor angetrieben wird.

Hierbei erfolgt die Umwandlung der Drehbewegung der Mutter auf die Linearbewegung der Spindel, welche den Flügelt öffnet bzw. schließt, mit Hilfe der Gewindesteigung. Dieses Prinzip hat den Vorleil, dass große Kräfte übertragen werden können. Nachteilig sind aber die hohen Herstellungskosten; bei diesem Antrieb entfällt ein Großteil der Kosten auf das Spindel-Mutter-System. Zudem ragen diese Antriebe senkrecht in den Raum hinein, was im Hinblick auf das Design ungünstig ist.

Um die Nachteile der Spindelantriebe insbesondere im Hinblick auf das Erscheinungsbild zu vermeiden, werden Kettenantriebe eingesetzt. Diese verfügen über einseitig oder beidseitig steife Gliederketten, die im ausgefahrenen Zustand starr sind und so Druckkräfte auf den Flügel übertragen können. Die Kettenglieder selbst sind gelenkig miteinander verbunden, in der Regel durch Bolzen. Eleganter als Spindelantriebe erfordern Kettenantriebe aufgrund der Vielzahl an Kleinteilen (Innen, Außenglieder, Kettenbolzen) jedoch einen hohen Montageaufwand und sind verschmutzungsanfällig.

Ein Überblick über Scheren-, Spindel- und Kettenantriebe sowie deren Anbieter gibt Markus Hoeft in der Fachzeitschrift bba Bau Beratung Architekur, Ausgabe 06/2005, S. 54, 56ff.

In DE 4407276 B4 wird eine Ausstellvorrichtung für einen Flügel eines Fensters, Lüftungsklappe, Lichtkuppel, Tür oder dergleichen beschrieben, der als Ausstellelement ein Schubband verwendet, um Zug- und/oder Druckkräfte zu übertragen, das einen vorgewölbten Querschnitt aufweist.

Bei allen genannten Antriebskonzepten wird die Kraft für die Flügelbewegung entweder manuell oder mit einer Hilfsenergie aufgebracht.

### Aufgabenstellung

Bei diesen nach dem Stand der Technik bekannten Antriebskonzepten wird eine Mehrzahl von Bauteilen benötigt, die einen hohen Anteil am Preis des gesamten Antriebs ausmachen. Für einige Antriebe sind besonders teure Bauteile erforderlich. Darüber hinaus steigt mit der Anzahl der Bauteile die Bruch- bzw. Störungsgefahr des Antriebes. Die beim Kettenantrieb benötigte Kette ist in der Herstellung aufwändig und teuer. Bei der Ausgestaltung des Antriebskonzeptes mit einem Schubband mit vorgewölbten Querschnitt ist die Stabilität und Möglichkeit der Kraftübertragung gegenüber den anderen beschriebenen Antrieben reduziert. Das Schubband mit vorgewölbtem Querschnitt kann daher nur für kleine Ausstellweiten und kleine Kräfte verwendet werden, Ebenso knickt das Schubband mit vorgewölbtem Querschnitt bereits bei geringer seitlicher Krafteinwirkung ein. Dadurch kann es nur bedingt in Bereichen eingesetzt werden, die eine erhöhte Betriebssicherheit erfordern, wie z.B. öffentlich zugängliche Gebäude.

Die Aufgabe besteht darin, ein kostengünstiges und gleichwohl stabiles Antriebssystem zu schaffen. Hieraus ergibt sich die Problematik, das kraftübertragende Antriebselement derart weiterzubilden, dass es einerseits kostengünstig hergestellt werden kann, andererseits eine vergleichbare Druckkraft wie eine Kette mit entsprechender Baugröße übertragen kann.

### Lösung

Die Aufgabe wird durch die Merkmale des Anspruchs 1 gelöst. Dies geschieht dadurch, dass zur Kraftübertragung auf den Flügel fest oder beweglich mit einem Band aus einem flexiblen Werkstoff verbundene steife Elemente (6) eingesetzt werden. Dabei ist auch denkbar, innerhalb eines Antriebs sowohl fest als auch beweglich verbundene Elemente einzusetzen.

Die steifen Elemente (6) und das Band (7) werden von einem Antriebsrad (3) bewegt und an diesem umgelenkt. Die Kraft wird von der manuellen oder motorischen Antriebseinrichtung über das Antriebsrad (3) formschlüssig, beispielsweise mit Hilfe von Schrauben (5), auf die steifen Elemente (6) oder das Band (7) aus einem flexiblen Werkstoff übertragen, welche den Flügel bewegen.

Die formschlüssige Kraftübertragung vom Antriebsrad (3) auf das die Elemente verknüpfende Band (7) kann z.B. erfolgen, indem Öffnungen (4) im Antriebsrad die Kraft auf Schrauben (5) und somit indirekt auf die steifen Elemente (6) übertragen. Durch die steifen Elemente (6) auf dem Rücken des Bandes (7) wird ein Knicken des Bandes erschwert und die Eignung zur Übertragung von Druckkräften verbessert, so dass der Umfang der Kraftübertragung der Ketten- und Scherenantriebe erreicht wird.

Bei Druckbeanspruchung übertragen die steifen Elemente (6) die Druckkraft während das Band (7) auf Zug beansprucht wird. Bei Zugbeanspruchung wird das Band (7) auf Zug beansprucht und die steifen Elemente werden entlastet. Werden die Elemente (6) nicht fest mit dem Band (7) verbunden, sondern sind in Richtung der eingeleiteten Druckkraft beweglich, oder wird das Band (7) nicht mit Hilfe des Vorspannwinkel (α) in die rückensteife Lage versetzt, so kann es bei Einleitung der Druckkraft auch sein, dass die steifen Elemente (6) auf Druck belastet werden und gleichzeitig im Band (6) keine Zugkraft herrscht. In diesem Fall wäre das Band (6) unbelastet.

Somit wird die Funktion, welche beim Kettenantrieb durch das Abstützen der einzelnen Kettenglieder gegeneinander durch die steifen Elemente (6) erfüllt. Die Funktion der Kettengelenke übernimmt die Biegsamkeit des eingesetzten Werkstoffs des Bandes (7).

Die Antriebseinheit kann sowohl am Rahmen als auch am Flügel montiert werden. Ebenso ist es möglich den Antrieb, je nach Baugröße, zwischen Flügel und Rahmen zu montieren. Dadurch ist er bei geschlossenem Flügel unsichtbar und bei sehr kleinen Bauformen muss der Flügel nicht ausgefräst werden. Aufgrund der einfachen Bauweise und Montage werden Herstellungskosten bei gleicher Stabilität und Leistung gesenkt. Außerdem bietet dieser Antrieb Gestaltungsmöglichkeiten für ein ansprechendes Design. Die genannten Vorteile sind vor allem im Vergleich zum Kettenantrieb zu sehen, denn mit dem hier vorgestellten Antrieb können vergleichbare Druckkräfte wie bei einer entsprechenden Kette übertragen werden. Aufgrund der deutlich erhöhten Stabilität ist dieser Antrieb im Vergleich zu einem Antrieb mit vorgewölbtem Band zu bevorzugen. Vorteilhafte Ausgestaltungen sind Gegenstand der Unteransprüche.

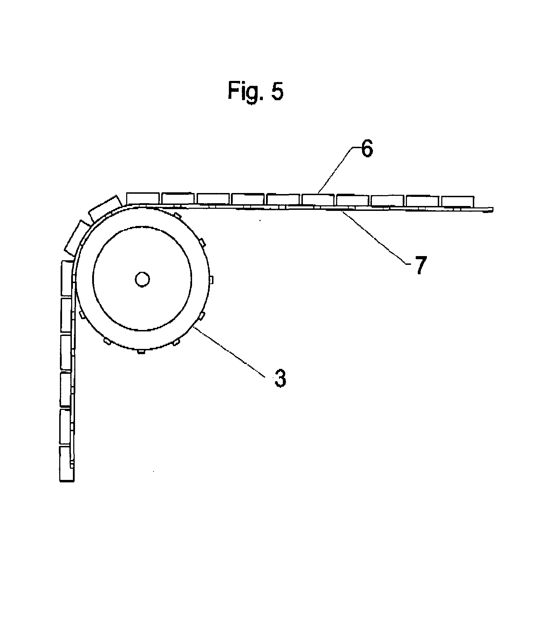

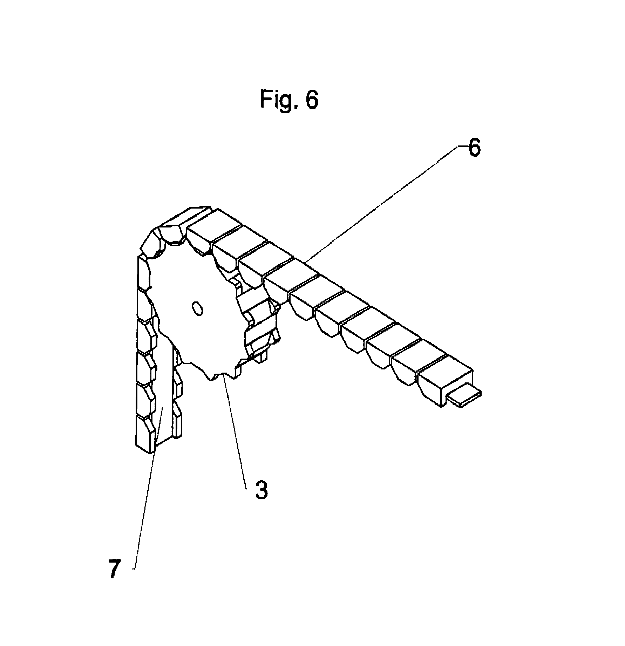

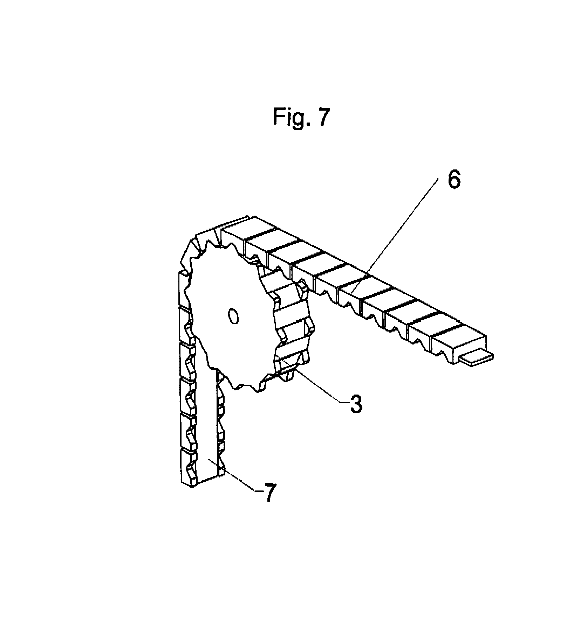

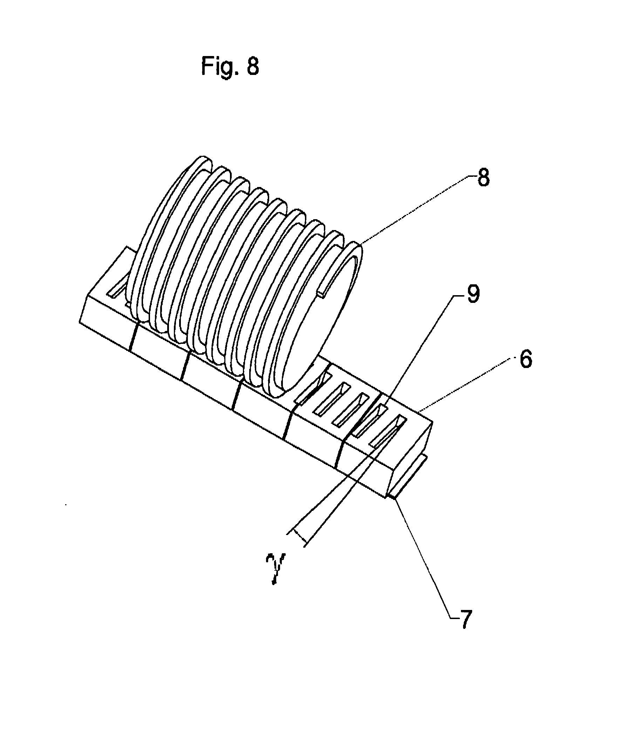

Eine weitere Lösungsmöglichkeit der Aufgabe besteht darin, die Kraft direkt vom Antriebsrad (3) auf die steifen Elemente (6) zu übertragen. Dies kann form- oder kraftschlüssig erfolgen. In einer denkbaren Ausführung, Fig. 6, greift das Antriebsrad (3) zwischen die steifen Elemente (6). Fig. 7 zeigt eine weitere Ausgestaltung, jedoch greift das Antriebsrad (3) mittig an den steifen Elementen (6) an. Die steifen Elemente (6) ragen über das Band (7) hinaus und ermöglichen die Krafteinleitung über das Antriebsrad (3). Über eine Schnecke lässt sich ebenfalls eine direkte Krafteinleitung umsetzen. Fig. 8 zeigt beispielhaft, wie die Schnecke (8) in Ausformungen (9) auf den steifen Elementen (6) eingreift. Durch den passenden Winkel (γ) der Ausformungen (9) wird eine Drehbewegung der Schnecke (8) in eine Linearbewegung der steifen Elemente (6) und des Bandes (7) umgesetzt. Denkbar ist auch eine direkte Kraftübertragung vom Antriebsrad (3) auf das Band (7), wie sie in Fig. 5 dargestellt wird.

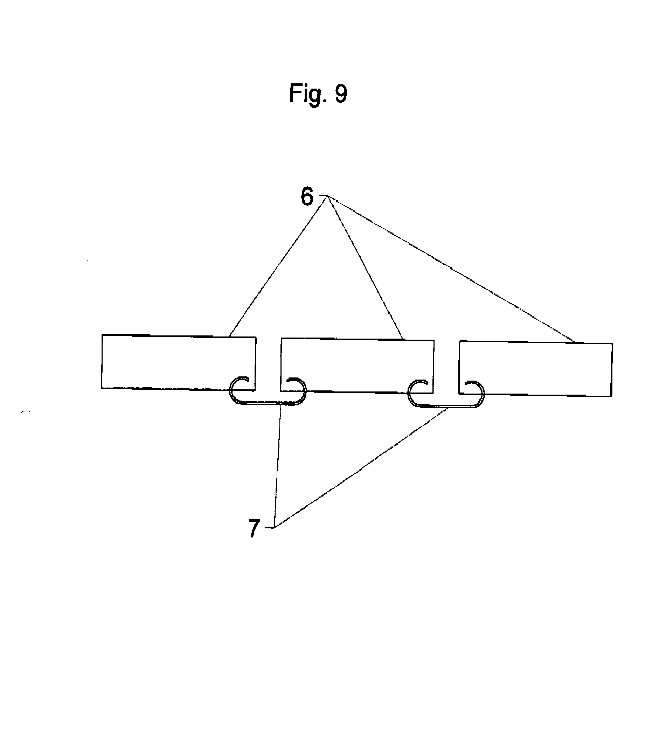

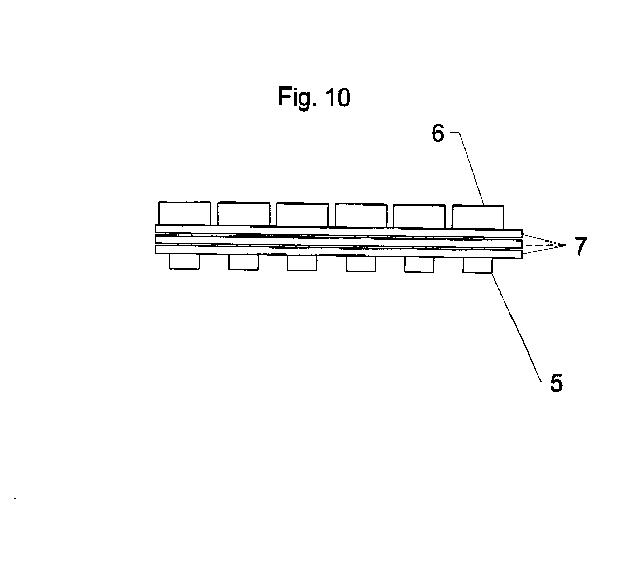

Es ist auch möglich, mehrere mit steifen Elementen (6) besetzte Bänder (7) in einem Antrieb einzusetzen. Entweder wird jedes steife Element mit einem Band mit dem nächsten steifen Element verbunden, wie schematisch in Fig. 9 gezeigt. Es können auch mehrere Bänder übereinander gelegt werden, um die Stabilität zu erhöhen. Dies zeigt Fig. 10 am Beispiel einer Schraubenverbindung zwischen drei Bändern (7) und den steifen Elementen (6).

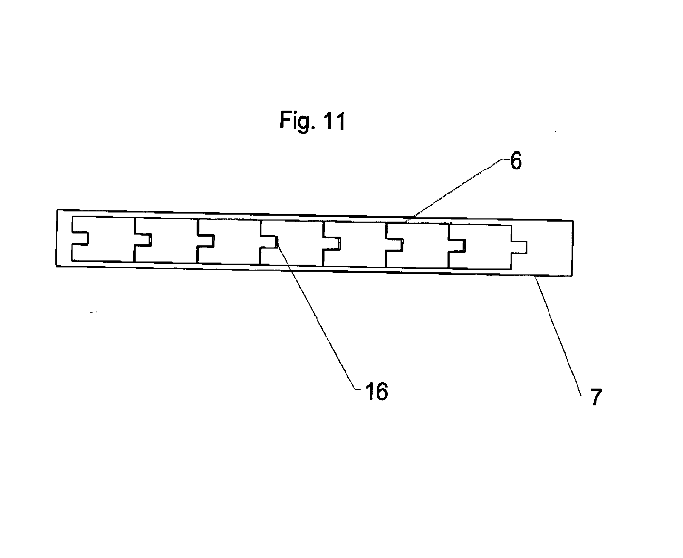

Um die Steifigkeit und Stabilität der Gesamtkonstruktion zu erhöhen, können sich die steifen Elemente (6) mit Hilfe von Nocken (16) verzahnen (Fig. 11).

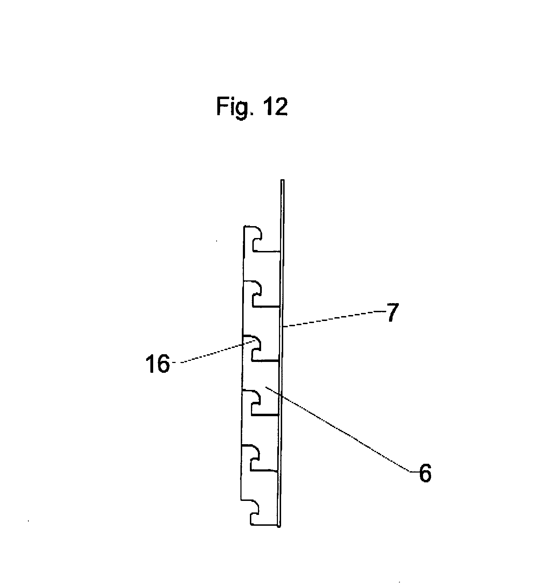

Eine Sonderform der Konstruktion, bei der auch die steifen Elemente (6) auf Zug beansprucht werden, wird in Fig. 12 gezeigt. Das Band (7) dient dabei zur

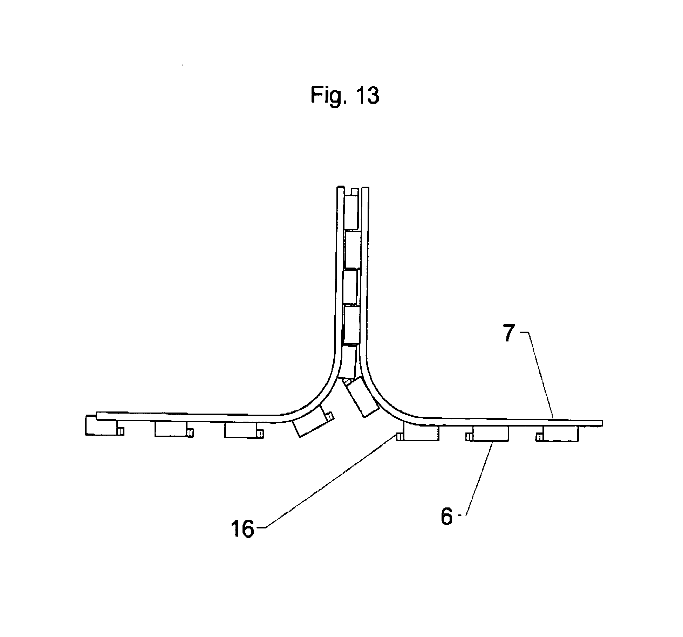

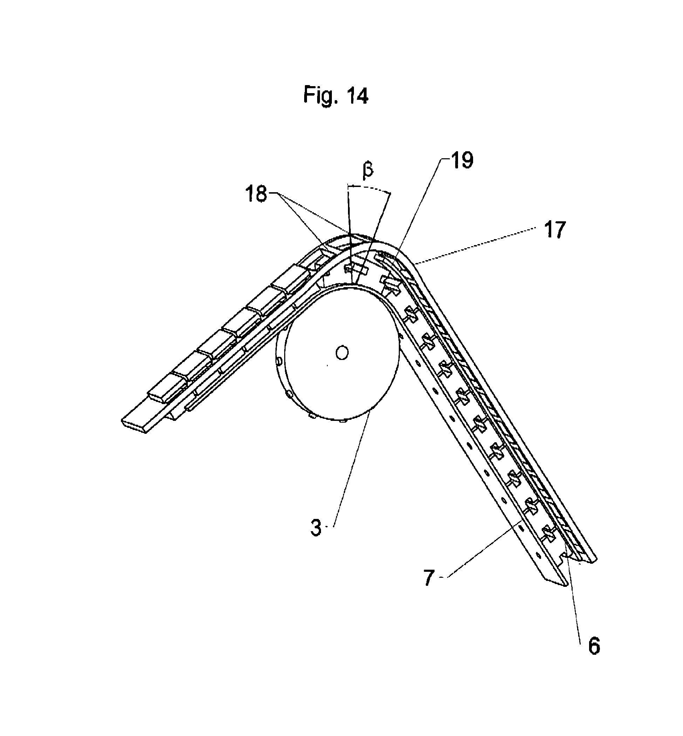

Realisierung der Gelenkbewegung. Die steifen Elemente (6) sind mit derartigen Nocken (16) ausgestattet, so dass neben der Übertragung von Druckkräften auch die Übertragung von Zugkräften möglich ist. Eine andere Art der Verzahnung zeigt Fig. 13. Hier werden die steifen Elemente (6) auf zwei entgegengesetzt angeordneten Bändern (7) angeordnet. Betrachtet man jedes Band (7) einzeln, so fehlt jedes zweite steife Element (6). Erst durch das Zusammenfügen der beiden Bänder (7) entsteht eine Konstruktion, weiche über die steifen Elemente (6) Druckkräfte übertragen kann. Die Form der Nocken (16) wurde so verändert, dass die steifen Elemente (6) im verzahnten Zustand größtmöglichen Zusammenhalt haben. Die Verzahnung kann auch über zusätzliche Bauteile erfolgen. Fig. 14 zeigt beispielhaft wie die Verzahnung der steifen Elemente (6) über ein mit Stegen versehenes Verbindungsband (17) erfolgen kann. Im verzahnten Zustand sind die Stege des Verbindungsbandes (18) von den steifen Elementen (6) umschlossen. Beim Umlenken des Bandes (7) am Antriebsrad (3) entsteht zwischen den steifen Elementen (6) der Öffnungswinkel (β). Dieser Öffnungswinkel (β) ermöglicht das Ausfädeln des Verbindungsbandes (17). Die Trennwand (19) separiert die steifen Elemente (6) vom Verbindungsband (17). Da sowohl die steifen Elemente (6) als auch das Verbindungsband (17) nach Durchlaufen der Separierung am Antriebsrad (3) sich nicht mehr unter Krafteinwirkung befinden, können nun sowohl die steifen Elemente (6) als auch das Verbindungsband (17) aufgerollt, oder wie in Fig. 14 lose geführt werden.

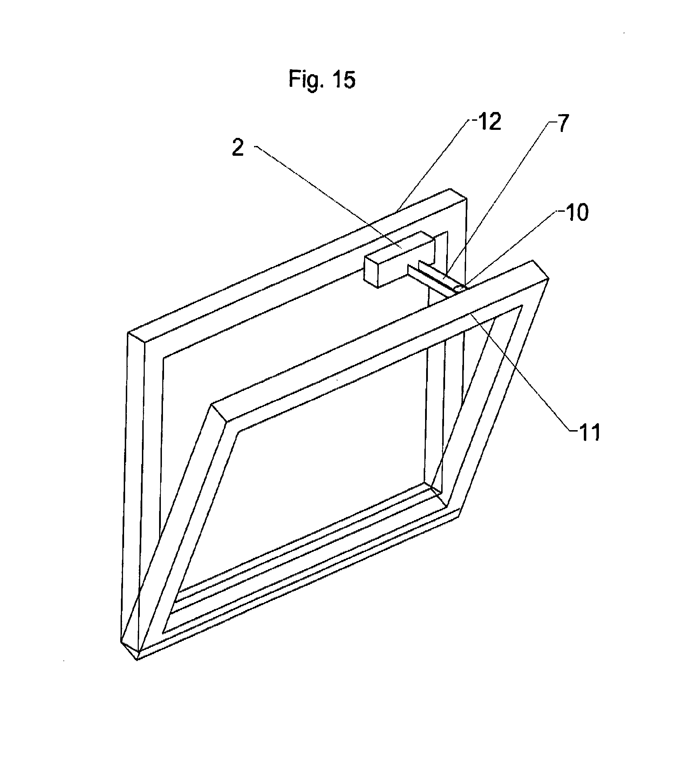

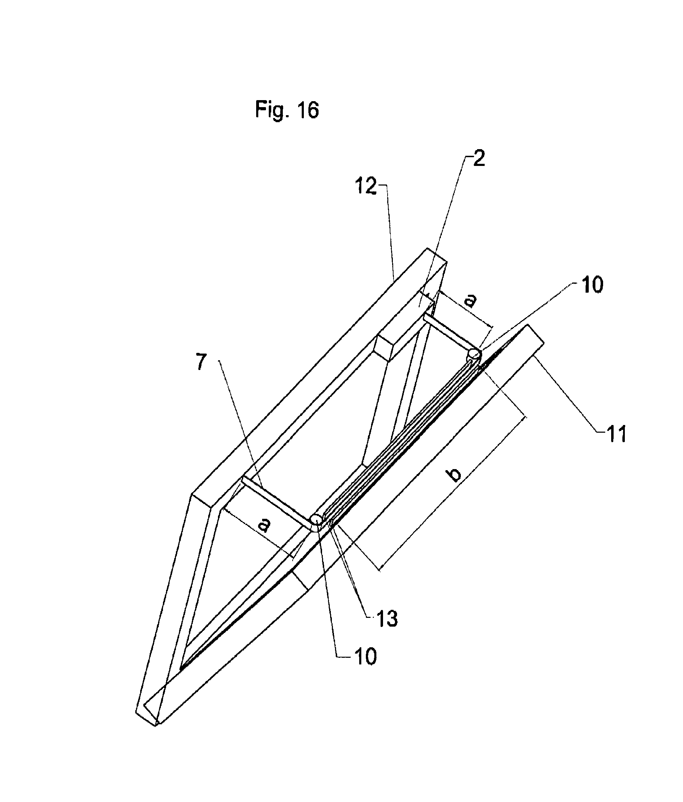

Des Weiteren kann der Antrieb Umlenkungen (10) des flexiblen Materials aufweisen. Dies ermöglicht einerseits, dass der Antrieb nicht in unmittelbarer Nähe zum Flügel (11) montiert werden muss. Andererseits kann die Umlenkung (10) auch in der Form erfolgen, dass das Band (7) des Antriebs zum Flügel (11) geführt wird und von dort wieder zurück zum Rahmen (12). Hierbei entsteht eine Art Flaschenzug, wodurch die Kräfte des Antriebs gesteigert werden, wie in Fig. 15 am Beispiel der Rahmenmontage dargestellt. In sinnvoller Ausgestaltung kann bei großen Flügeln der Antrieb in einem Eckpunkt des Rahmens montiert werden und das Band wird zum entsprechenden Eckpunkt des Flügels geführt, wie in Fig. 16 in geöffnetem Zustand dargestellt. Dort befindet sich eine Umlenkung, welche das Band an den dem Antrieb abgewandten Eckpunkt des Flügels führt An diesem Eckpunkt wird das Band wieder zum Rahmen umgeleitet. Die exakte Position kann je nach Flügel von den Eckpunkten abweichen. Ebenso kann der Antrieb auf dem Flügel montiert werden. Darüber hinaus kann in sinnvoller Ausgestaltung der Erfindung das Band zwischen den Eckpunkten des Flügels im Bereich (b) in einem Kanal (13) geführt werden. In diesem Bereich befinden sich bei geöffnetem Flügel keine steifen Elemente. In geschlossenem Zustand befinden sich in jedem Fall auch im Bereich (b) steife Elemente (6). Dies erfordert eine entsprechende Gestaltung des Kanals (13). Die steifen Elemente (6) wurden in Fig. 16 nicht dargestellt.

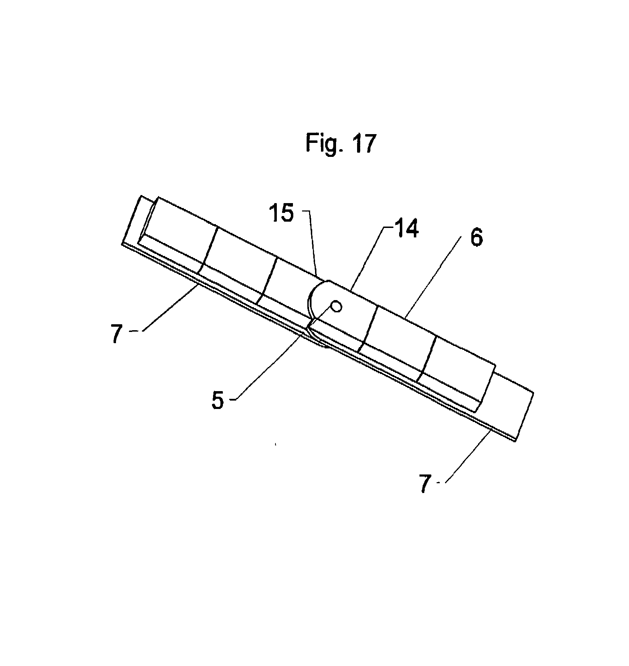

Bei Flügeln mit großen Öffnungsweiten, können mit Hilfe eines Drehgelenks zwischen den steifen Elementen (6) Störkanten umgangen werden. Bei großen Öffnungsweiten kollidiert z.B. bei Kettenantrieben mit Rahmenmontage die Kette mit dem Fensterprofil des Flügels. Mit einem Drehgelenk an der Stelle der Störkante kann die Kraft um diese Störkante herum auf den Flügel geleitet werden. In Fig. 17 ist eine Ausgestaltung eines Drehgelenkes in dreidimensionaler Ansicht dargestellt. Das steife Element mit Halbkugel (14) passt in die Form des steifen Elements mit Halbschale (15). Der Drehpunkt befindet sich in der Mitte der Schraube (5) und die beiden Bänder (7) überlappen. Der Schraubenkopf befindet sich in dieser Darstellung (Fig. 17) auf der Unterseite des Bandes und ist daher nicht sichtbar.

### Ausführunasbeispiel

Bei dem Ausführungsbeispiel ist der Elektromotor (1) in einem Gehäuse (2) untergebracht und überträgt über die Zahnradschnecke Z1 die Drehbewegung auf das Schneckenrad Z2. Das Schneckenrad ist mit dem Zahnrad Z3 verbunden und dieses überträgt wiederum die Drehbewegung auf das Zahnrad Z4. Die Übertragung der Drehbewegung erfolgt entsprechend bis zum Zahnrad Z6. Mit diesen Getriebestufen werden die hohe Drehzahl und das geringe Drehmoment des Elektromotors auf eine niedrige Drehzahl mit hohem Drehmoment überführt.

Das Zahnrad Z6 ist mit dem Antriebsrad (3) verbunden. Das Antriebsrad weist am Umfang Öffnungen (4) in Zylinderform auf. Diese Öffnungen bieten Platz für Köpfe von Schrauben (5), auf welche die Schub- oder Zugkraft formschlüssig übertragen wird. Diese Schrauben (5) sind in die steifen Elemente (6) eingeschraubt und gehen durch das Federstahlband (7) hindurch. Das Federstahlband (7) mit den steifen Elementen (6) verlässt unter dem Vorspannwinkel (α) das Gehäuse (2). Dies bewirkt, dass das Band (7) etwas durchgebogen wird und sich die steifen Elemente (6) an den oberen Kanten abstützen. Somit wird das Federstahlband (7) auf Zug beansprucht und die Druckkräfte über die steifen Elemente (6) übertragen.

Der Federbandstahl wird in diesem Ausführungsbeispiel als flexibler Werkstoff eingesetzt.

Die steifen Elemente (6) und das Band (7) werden im Gehäuse am Antriebsrad entlang geführt und das Band (7) ist mit einem Ende am Flügel befestigt. Das lose Ende wird am Motor vorbeigeführt und aufgewickelt.

Wenn man die Kraft indirekt vom Antriebsrad (3) über die Schrauben (5) auf die steifen Elemente (6) überträgt, steht mit dem Schraubenkopf eine größere Fläche zur Kraftübertragung zur Verfügung als bei direkter formschlüssiger Kraftübertragung vom Antriebsrad (3) auf das schmale Band (7). Dadurch können größere Kräfte übertragen werden.

Um die allgemeine Steifigkeit der Gesamtkonstruktion zu erhöhen, verzahnen sich die steifen Elemente (6) miteinander. Beim Umbiegen des Bandes (7) am Antriebsrad (3) wird die Verzahnung der Nocken (16) kurzzeitig gelöst, bis das Band den Eingriffswinkel des Antriebsrades (3) wieder verlässt.

Beim Ausführungsbeispiel mit Elementen (6), die mit dem Band (7) fest verbunden sind, werden die steifen Elemente (6) aufgrund des Vorspannwinkels (α) aneinander gedrückt. Daraus resultiert eine Zugkraft im Band.

Das Ausführungsbeispiel wird im Folgenden anhand von Zeichnungen erläutert. Dabei zeigen:

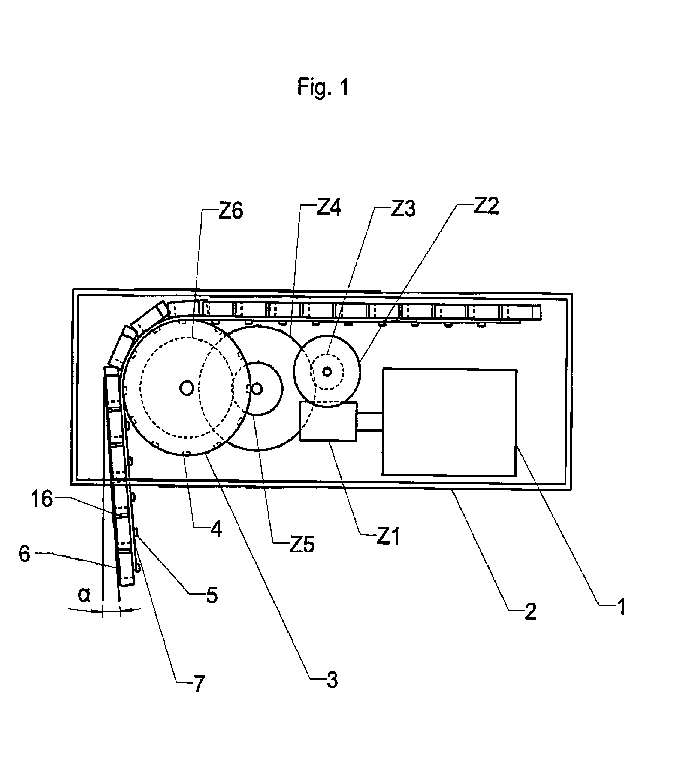

Fig. 1 eine Draufsicht des Antriebes ohne Gehäuseoberteil

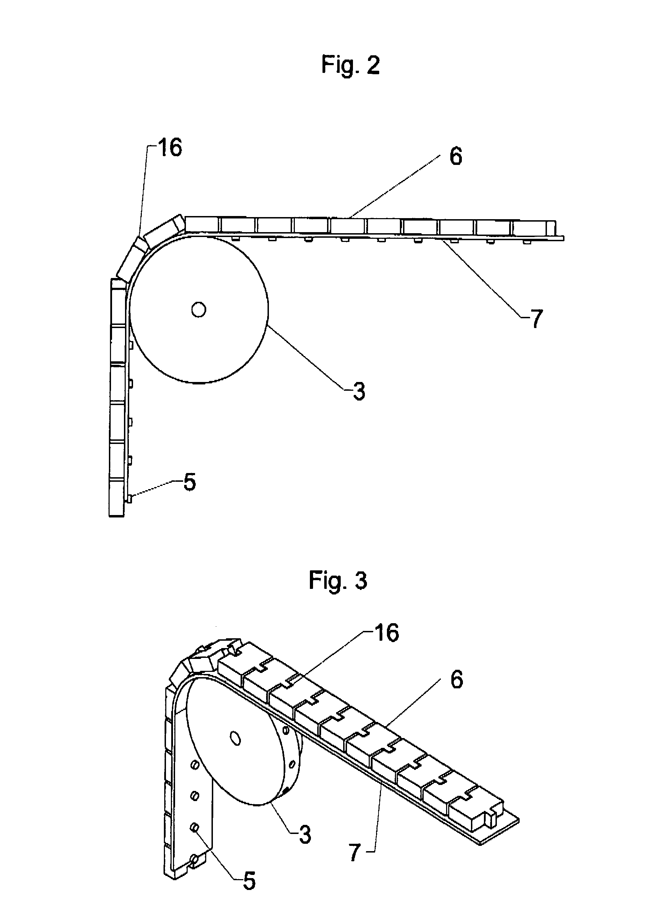

Fig. 2 Ausschnitt des Bandes mit steifen Elementen mit Schrauben in der Draufsicht
Fig. 3 Ausschnitt des Bandes mit steifen Elementen mit Schrauben in dreidimensionaler Darstellung

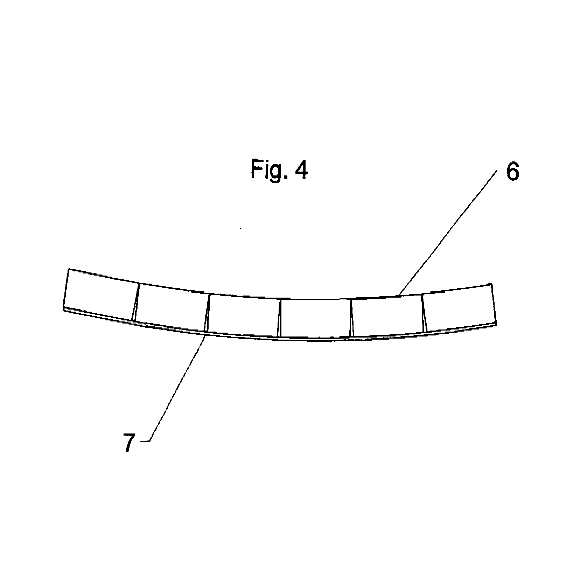

Fig. 4 Ausschnitt des Bandes mit steifen Elementen in gebogenem Zustand unter Druckbelastung in der Seitenansicht
Fig. 5 Ausschnitt des Bandes mit steifen Elementen bei direkter formschlüssiger Kraftübertragung vom Antriebsrad auf das Band in der Draufsicht

### Bezugszeichenliste:

Z1 - Zahnradschnecke
Z2 - Schneckenrad
Z3 -Z6 -Zahnräder
1 - Elektromotor
2 - Gehäuse
3 - Antriebsrad
4 - Öffnungen im Antriebsrad
5 - Schraube
6 - steife Elemente
7 - Band aus flexiblem Werkstoff
8 - Schnecke
9 - Ausformungen
10 - Umlenkung
11 - Flügel
12 - Rahmen
13 - Kanal
14 -steifes Element mit Halbkugel
15 - steifes Element mit Halbschale
16 - Nocken
17 - Verbindungsband
18 - Stege des Verbindungsbandes
19 - Trennwand
α - Vorspannwinkel
β - Öffnungswinkel
γ - Winkel für Ausformungen
(a) - Bereich a: Bereich mit steifen Elementen
(b) - Bereich b: in diesem Bereich sind in geöffnetem Zustand keine steifen Elemente

## Patentansprüche

1. Schub- und Zugantrieb zum Öffnen und Schließen von Flügeln (Fenstern, Türen etc.) oder zur Bewegung zweier Bauteilen relativ zueinander, **dadurch gekennzeichnet, dass** das kraftübertragende Element aus mehreren steifen Elementen (6) besteht, welche mit einem Band (7) aus einem flexiblen Werkstoff verbunden werden. Diese sind auf dem Rücken des Bandes - der Biegerichtung abgewandten Seite - fest angebracht.
In bevorzugter Ausführung ist die Verbindung zwischen Band und steifen Elementen als Schraub-, Niet-, Schweiß-, Clips-, Bolzen-, Stift-, Klemm- oder Klebeverbindung ausgebildet oder es werden bereits im Herstellungsprozess durch Verformungen des Bandes (7) die steifen Elementen (6) erstellt.

2. Schub- und Zugantrieb nach Anspruch 1, **dadurch gekennzeichnet dass** er aus mehreren Bändern besteht.

3. Schub- und Zugantrieb nach den Ansprüchen 1 bis 2, **dadurch gekennzeichnet, dass** die steifen Elemente (6) beweglich mit dem Band (7) verbunden sind.

4. Schub- und Zugantrieb nach den Ansprüchen 1 bis 3, **dadurch gekennzeichnet, dass** das Antriebsrad die Kraft direkt auf die steifen Elemente (6) oder das Band (7) überträgt.

5. Schub- und Zugantrieb nach den Ansprüchen 1 bis 4, **dadurch gekennzeichnet, dass** an Stelle des Antriebsrades eine gewindeförmige Schnecke (8) eingesetzt wird, die in die steifen Elemente (6) oder in das Band (7) eingreift.

6. Schub- und Zugantrieb nach Anspruch 1 bis 5 **dadurch gekennzeichnet, dass** die Kraftübertragung kraftschlüssig erfolgt. Das Antriebsrad (3) überträgt über Reibung die Kraft auf die steifen Elemente (6), auf das Band (7) oder auf die Verbindungselemente. Die Kontaktflächen sind so gestaltet, dass die Reibkräfte entsprechend der gewünschten Anwendung genutzt werden können.

7. Schub- und Zugantrieb nach den Ansprüchen 1 bis 6, **dadurch gekennzeichnet, dass** der Antrieb Umlenkungen (10) des flexiblen Materials aufweist.

8. Schub- und Zugantrieb nach den Ansprüchen 1 bis 7, **dadurch gekennzeichnet, dass** zwei Bänder mit steifen Elementen derart verbunden werden, dass sich daraus ein Drehgelenk bildet. In sinnvoller Ausgestaltung befindet sich der Drehpunkt an einem Verbindungspunkt zwischen steifen Elementen (6) und Band (7). Ebenso sind in sinnvoller Ausgestaltung die beiden steifen Elemente (6), welche am Drehpunkt aufeinandertreffen, so gestaltet, dass eine Drehbewegung zugelassen wird, z.B. in Form einer Halbkugel und Halbschale.

9. Schub- und Zugantrieb nach den Ansprüchen 1 bis 8, **dadurch gekennzeichnet, dass** die steifen Elemente sich ineinander verzahnen.
Die steifen Elemente (6) besitzen an der Berührungsfläche zum nächsten steifen Element einen Nocken (16), der in eine entsprechende Ausformung des benachbarten steifen Elementes greift (Fig. 15).

10. Schub- und Zugantrieb nach Anspruch 9, **dadurch gekennzeichnet**, die Verzahnung über den Einsatz von zusätzlichen Bauteilen realisiert wird. Je nach Art der Konstruktion kann auf den Vorspannwinkel (α) verzichtet werden.
